# EUROPÄISCHE PATENTANMELDUNG

(11) **EP 4 480 983 A1**
(43) Veröffentlichungstag der Anmeldung: **25.12.2024**
(21) Anmeldenummer: 23180227.3
(22) Anmeldetag: 20.06.2023
(51) Int. Cl.: C08G 59/68, C08G 59/02, C08G 59/42

(54) **HÄRTENDE ZUSAMMENSETZUNG AUF BASIS NACHWACHSENDER ROHSTOFFE**

(71) Anmelder: ECOPOX GmbH & Co. KG, 06766 Bitterfeld-Wolfen (DE)
(72) Erfinder: Saalmann, Mario, 06844 Dessau-Roßlau (DE); Biewend, Michel, 06112 Halle (Saale) (DE); Feldmann, Marius, 96182 Reckendorf (DE); Mielke, Benjamin, 06808 Bitterfeld-Wolfen (DE)
(74) Vertreter: Kudla, Christof

(57) **Zusammenfassung**

Die vorliegende Erfindung betrifft eine Zusammensetzung umfassend oder bestehend aus a) mindestens ein erstes Monomer aus einem epoxidierten Pflanzenöl, umfassend mindestens zwei Epoxidgruppen, b) mindestens einem zweiten Monomer, umfassend mindestens zwei Carbonsäuregruppen oder mindestens eine Carbonsäureanhydridgruppe, c) mindestens ein organisches Salz, das eine chemische Reaktion zwischen dem ersten und dem zweiten Monomer katalysiert und einen Schmelzpunkt unter 200 °C aufweist. Die vorliegende Erfindung betrifft zudem eine Antidröhnmasse hergestellt aus einer erfindungsgemäßen Zusammensetzung, eine Verwendung einer erfindungsgemäßen Zusammensetzung als akustisch dämpfendes Material, beispielsweise im Fahrzeug- oder Gerätebau. Die vorliegende Erfindung betrifft zudem ein Verfahren zur Applikation einer erfindungsgemäßen Zusammensetzung auf ein Substrat.

## Beschreibung

Die vorliegende Erfindung betrifft eine Zusammensetzung umfassend oder bestehend aus a) mindestens ein erstes Monomer aus einem epoxidierten Pflanzenöl, umfassend mindestens zwei Epoxidgruppen, b) mindestens einem zweiten Monomer, umfassend mindestens zwei Carbonsäuregruppen oder mindestens eine Carbonsäureanhydridgruppe und c) mindestens ein organisches Salz, das eine chemische Reaktion zwischen dem ersten und dem zweiten Monomer katalysiert und einen Schmelzpunkt unter 200 °C aufweist. Die vorliegende Erfindung betrifft zudem eine Antidröhnmasse hergestellt aus einer erfindungsgemäßen Zusammensetzung, eine Verwendung einer erfindungsgemäßen Zusammensetzung als akustisch dämpfendes Material, beispielsweise im Fahrzeug- oder Gerätebau. Die vorliegende Erfindung betrifft zudem ein Verfahren zur Applikation einer erfindungsgemäßen Zusammensetzung auf ein Substrat.

Während des Betriebes von Fahrzeugen oder Geräten können dünnwandige Bleche, durch sich bewegende Teile oder laufende Motoren in Schwingungen versetzt werden. Diese Schwingungen können als Körperschall an mit den Blechen verbundene Bauteile weitergegeben werden und auch an weit entfernten Stellen an die Umgebung in Form von für den Menschen hörbaren Schall (Hörschall) abgestrahlt werden. Um für den Menschen wahrnehmbaren Hörschall und Körperschall, der als Vibrationen wahrgenommen werden kann, zu reduzieren, können die Bauteile, insbesondere Bleche, mit schalldämpfenden Materialien beschichtet werden, welche den Schall absorbieren und/oder durch die erhöhte Masse aus Blech und Beschichtung die Resonanzfrequenz der Bleche bzw. des Blech-Beschichtungssystems verändern können. Entsprechende schalldämpfenden Materialien werden als Antidröhnmasse oder Dämpfungsmasse bezeichnet. Im Automobilbau und Gerätebau werden üblicherweise flüssig applizierbare Antidröhnmassen verwendet, die auch als liquid applied sound damping (LASD) oder spritzbare Dämpfungsmasse (SDM) bezeichnet werden. Diese spritzbaren Dämpfungsmassen werden direkt auf das Bauteil aufgegeben und härten anschließend - meist nach Einwirkung von Wärme - selbstständig aus.

Bisher werden als Antidröhnmassen Acrylatdispersionen oder Vulkanisationssysteme verwendet, die meist Schwefel oder flüchtige schwefelhaltige Verbindungen aufweisen.

In der EP0793697B1 wird ein Elastomer-Produkt mit akustischen Dämpfungseigenschaften beschrieben, das neben zahlreichen weiteren Bestandteilen auch ein Vulkanisationssystem aufweist, das Schwefel als Vulkanisationsmittel enthalten kann.

In der EP1238000B1 wird ein Gummiwerkstoff zu Schallisolation beschrieben, der Kautschuk oder Kautschukverschnitt, Schwermetalle in Pulverform und Mischungsingredienzien enthält. Als Mischungsingredienzien wird Schwefel als Vulkanisationsmittel angegeben.

In der EP1838778B2 wird eine spritzbare, niedrigviskose Kautschukdämpfungsmasse beschrieben, die neben flüssigen Polyenen und Kurzfasern auch ein Vulkanisationsmittel umfasst, bei dem es sich um eine Mischung aus Schwefel und einem oder mehreren organischen Beschleunigern und Metalloxiden handelt.

Es hat sich gezeigt, dass die üblicherweise verwendeten Antidröhnmassen den Nachteil aufweisen, dass während der Verarbeitung und hierbei insbesondere während des für die Vulkanisation benötigten Erhitzens der Antidröhnmassen Schwefel oder flüchtige schwefelhaltige Verbindung freigesetzt werden, die neben einer Geruchsbelästigung auch gesundheitliche Probleme verursachen können. Die Freisetzung erfolgt dabei nicht vollständig während der Verarbeitung der Antidröhnmassen, sondern kann aufgrund von Diffusionsvorgängen auch zeitversetzt nach Fertigstellung der Automobile oder Geräte erfolgen, was dazu führen kann, dass der Endverbraucher negativ von den freigesetzten Verbindungen beeinträchtigt wird.

Zudem müssen die üblicherweise verwendeten Antidröhnmassen teilweise sehr viele unterschiedliche Bestandteile aufweisen, um die gewünschten Eigenschaften der Antidröhnmassen zu erhalten. Mit steigender Komplexität einer Zusammensetzung wächst allerdings der Aufwand zur Herstellung der Zusammensetzung und meist der Preis der Zusammensetzung.

Aufgabe der vorliegenden Erfindung war es, eine Zusammensetzung bereitzustellen, bei dem die Emission von Schwefel oder flüchtigen schwefelhaltigen Verbindungen reduziert oder vermindert werden kann. Die aus der Zusammensetzung hergestellten Antidröhnmassen sollten dabei sehr gute schallisolierende bzw. schalldämpfende Eigenschaften aufweisen. Zudem sollte die Zusammensetzung gut verarbeitet werden können, beispielsweise indem Sie aufgespritzt werden kann und sollte möglichst aus wenigen Komponenten bestehen, um die Komplexität der Zusammensetzung zu verringern.

Eine weitere Aufgabe der vorliegenden Erfindung war es, eine Zusammensetzung zu entwickeln, die einen möglichst hohen Anteil an Bestandteilen umfasst, die aus nachwachsenden Rohstoffen hergestellt wurden. Aufgrund der voranschreitenden Verknappung von fossilen Rohstoffen ist abzusehen, dass diese in Zukunft immer teurer werden und somit eine wirtschaftliche Nutzung dieser, erschwert wird. Zudem wirken sich nachwachsende Rohstoffe positiv auf die COz-Bilanz aus und leisten einen wichtigen Beitrag, um dem Klimawandel entgegenzuwirken.

Bei der Herstellung von Antidröhnmassen ist es wichtig, dass die flüssig oder pastös aufgebrachte, reaktive Mischung sich vor dem Aushärten in einem flüssigen oder pastösen Zustand befindet, um eine Verschmutzung und/oder Verstopfung der Dosiereinheit zu vermeiden und eine Verarbeitung nach dem Auftragen zu ermöglichen. Man spricht hier von der sogenannten "Startzeit" oder "Topfzeit", die ausreichend lang sein soll. Ein unerwünschtes Aushärten der Zusammensetzung soll unbedingt vermieden werden.

Gleichzeitig ist es aus Gründen der Produktivität höchst wünschenswert, dass die flüssig oder pastös aufgebrachte Mischung nach der Aktivierung, z. B. durch Erwärmen, möglichst schnell aushärtet, sodass eine schnelle Weiterverarbeitung des beschichteten Bauteiles möglich ist. Man spricht hier von der sogenannten "Montagezeit" oder "Klebfreizeit", die möglichst kurz sein soll.

Die Anforderungen an die Topfzeit und die Montagezeit sind also konträr. Um diese konträren Anforderungen zu erfüllen, sind in der Patentliteratur viele spezielle Katalysatoren und Verfahren bekannt, die zu einer möglichst langen Startzeit führen, gefolgt von einer möglichst raschen, lawinenartigen chemischen Reaktion, bis hin zur vollständigen Härtung. Allerding werden die oben erläuterte Grundanforderung einer möglichst langen Startzeit und einer möglichst kurzen Klebfreizeit bei den üblichen Systemen nur unzureichend erfüllt.

Eine weitere Aufgabe der vorliegenden Erfindung war es somit, eine Zusammensetzung zu entwickeln, bei der die Topfzeit und die Montagezeit einfach auf die Bedürfnisse in der Produktion eingestellt werden können.

Diese Aufgabe wurde erfindungsgemäß gelöst durch eine Zusammensetzung umfassend oder bestehend aus
a) mindestens ein erstes Monomer aus einem epoxidierten Pflanzenöl, umfassend mindestens zwei Epoxidgruppen,
b) mindestens einem zweiten Monomer, umfassend mindestens zwei Carbonsäuregruppen oder mindestens eine Carbonsäureanhydridgruppe,
c) mindestens ein organisches Salz, das eine chemische Reaktion zwischen dem ersten und dem zweiten Monomer katalysiert und einen Schmelzpunkt unter 200 °C aufweist.

Eigene Untersuchungen haben gezeigt, dass bei der Verwendung eines Gemisches aus Monomeren aus einem epoxidierten Pflanzenöl, die mindestens zwei Epoxidgruppen aufweisen, und Monomeren, die mindestens zwei Carbonsäuregruppen oder mindestens eine Carbonsäureanhydridgruppe aufweisen, auf die Verwendung von Schwefel, flüchtigen schwefelhaltige Verbindungen oder Verbindungen die flüchtige schwefelhaltige Verbindungen ausbilden verzichtet werden kann, da entsprechende Verbindungen nicht als Katalysator für dieses Monomersystem dienen. Hierdurch ist es gelungen, die Emission von Schwefel oder flüchtigen schwefelhaltigen Verbindungen zu verhindern oder zu reduzieren. Gleichzeitig hat es sich gezeigt, dass aus der erfindungsgemäßen Zusammensetzung hergestellte Antidröhnmassen ausgezeichnete Schalldämpfungseigenschaften und eine ausgesprochen gute Haftung auf Substraten aufweisen. Entsprechende erfindungsgemäße Zusammensetzungen lassen sich zudem flüssig oder pastös applizieren.

Zudem hat sich überraschenderweise gezeigt, dass es möglich ist, Monomere zu verwenden, die aus nachwachsenden Rohstoffen gewonnen werden können. Auf Monomere, die aus fosilen Rohstoffen (z.B. Erdöl) gewonnen werden, kann vollständig oder weitestgehend verzichtet werden. Somit kann mit den erfindungsgemäßen Zusammensetzungen auch dem ökologischen Aspekt Rechnung getragen werden, dass bei einer thermischen Verwertung der erfindungsgemä-ßen Zusammensetzungen oder den daraus hergestellten erfindungsgemäßen Antidröhnmassen nur so viel Kohlendioxid freigesetzt wird, wie zuvor durch das Wachstum der nachwachsenden Rohstoffe gebunden wurde.

Zudem ist es bei erfindungsgemäßen Zusammensetzungen vorteilhaft, dass sie als Einkomponentensysteme (1K) vorliegen können. Somit erübrigt sich eine vor der Verwendung von Zweikomponenten (2K) notwendige Vermischung der einzelnen Komponenten. Zudem kann die Aushärtung (Polymerisation) der erfindungsgemäßen Zusammensetzung gezielt gesteuert werden, da die Aushärtung erst nach dem Erwärmen auf über 90°C (meist bei ca. 150°C) erfolgt. Somit kann eine vorzeitige Aushärtung während des Transportes (beispielsweise an heißen Sommertagen) ausgeschlossen werden.

In einer alternativen Ausgestaltung der erfindungsgemäßen Zusammensetzungen ist diese als von Zweikomponentensystem (2K) ausgebildet. Dies hat den Vorteil, dass die Aushärtung (Polymerisation) der erfindungsgemäßen Zusammensetzung erst nach dem Vermischen der Komponenten erfolgt und auch eine Aushärtung ohne zusätzliches Erwärmen der Zusammensetzung nach dem Auftragen möglich ist.

Eigene Untersuchungen haben gezeigt, dass sich erfindungsgemäße Zusammensetzungen flüssig applizieren lassen.

Im Rahmen der vorliegenden Erfindung wird unter einem Salz eine chemische Verbindung verstanden, die aus positiv geladenen Ionen, den sogenannten Kationen und negativ geladenen Ionen, den sogenannten Anionen aufgebaut ist. Unter einem organischen Salz wird ein Salz verstanden, bei dem das Anion, das Kation oder sowohl Anion als auch Kation eine organische Verbindung ist.

Eine Zusammensetzung ist erfindungsgemäß bevorzugt, wobei das mindestens eine organische Salz eine Verbindung ist, die ausgewählt ist aus den folgenden Verbindungen
I) eine Verbindung der Formel I 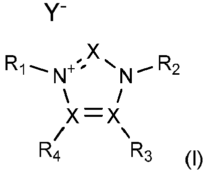 wobei
   Xjeweils unabhängig voneinander N oder C bedeuten,
   Y Chlorid, Bromid, lodid, Hexafluorophosphat (PF₆-), Bortetrafluorid (BF₄-), Hexafluoroantimonat (SbF₆⁻), Bis(trifluoromethylsulfonyl)imid (NTf₂⁻), Hydrogensulfat (HSO₄⁻), Methylsulfat (CH₃O₄S⁻), Ethylsulfat (EtOSO₃⁻), Tosylat (Tos), Mesylat (Mes-), Nitrat (NO₃⁻), Diethylphosphat ((Et)₂PO₄⁻), Triflat (CF₃SO₃⁻) oder Dicyanamid (N(CN)₂⁻) bedeutet,
   R1 und R2 unabhängig voneinander ein (ggf. verzweigter oder unverzweigter) Alkylrest mit 1 bis 16 C-Atomen, ein (ggf. verzweigter oder unverzweigter) Alkenylrest mit 2 bis 16 C-Atomen, ein substituierter oder unsubstantiierter Arylrest oder ein substituierter oder unsubstantiierter Benzylrest ist
      und
   R3 und R4 unabhängig voneinander Wasserstoff, ein (ggf. verzweigter oder unverzweigter) Alkylrest mit 1 bis 16 C-Atomen, ein (ggf. verzweigter oder unverzweigter) Alkenylrest mit 2 bis 16 C-Atomen, ein substituierter oder unsubstantiierter Arylrest ist,
II) eine Verbindung der Formel II 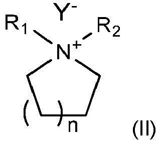 wobei
   n gleich 1 oder 2 ist,
   Y Chlorid, Bromid, lodid, Hexafluorophosphat (PF₆-), Bortetrafluorid (BF₄⁻), Hexafluoroantimonat (SbF₆⁻), Bis(trifluoromethylsulfonyl)imid (NTf₂⁻), Mesylat (Mes) bedeutet,
   R1 und R2 unabhängig voneinander ein (ggf. verzweigter oder unverzweigter) Alkylrest mit 1 bis 16 C-Atomen, ein (ggf. verzweigter oder unverzweigter) Alkenylrest mit 2 bis 16 C-Atomen, ein substituierter oder unsubstantiierter Arylrest oder ein substituierter oder unsubstantiierter Benzylrest ist,
III) eine Verbindung der Formel III 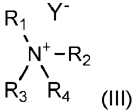 wobei
   Y Chlorid, Bromid, lodid, Hexafluorophosphat (PF₆⁻), Bortetrafluorid (BF₄⁻), Hexafluoroantimonat (SbF₆⁻), Bis(trifluoromethylsulfonyl)imid (NTf₂⁻), Mesylat (Mes⁻) bedeutet,
   R1, R2, R3 und R4 unabhängig voneinander ein (ggf. verzweigter oder unverzweigter) Alkylrest mit 1 bis 16 C-Atomen, ein (ggf. verzweigter oder unverzweigter) Alkenylrest mit 2 bis 16 C-Atomen, ein substituiert oder unsubstantiierter Arylrest oder ein substituiert oder unsubstantiierter Benzylrest ist oder vorzugsweise R1, R2, R3 und R4 gleich sind und ein (ggf. verzweigter oder unverzweigter) Alkylrest mit 1 bis 16 C-Atomen, ein (ggf. verzweigter oder unverzweigter) Alkenylrest mit 2 bis 16 C-Atomen, ein substituierter oder unsubstantiierter Arylrest oder ein substituierter oder unsubstantiierter Benzylrest ist,
IV) eine Verbindung der Formel IV 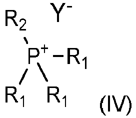 wobei
   Y Chlorid, Bromid, lodid, Hexafluorophosphat (PF₆-), Bortetrafluorid (BF₄-), Hexafluoroantimonat (SbF₆⁻), Bis(trifluoromethylsulfonyl)imid (NTf₂⁻), Hydrogensulfat (HSO₄⁻), Methylsulfat (CH₃O₄S⁻), Ethylsulfat (EtOSO₃⁻), Tosylat (Tos⁻), Mesylat (Mes-), Nitrat (NO₃), Diethylphosphat ((Et)₂PO₄⁻), Triflat (CF₃SO₃⁻) oder Dicyanamid (N(CN)₂⁻) bedeutet,
   R1 jeweils ein (ggf. verzweigter oder unverzweigter) Alkylrest mit 1 bis 16 C-Atomen, ein (ggf. verzweigter oder unverzweigter) Alkenylrest mit 2 bis 16 C-Atomen oder ein substituierter oder unsubstantiierter Arylrest ist
      und
   R2 ein (ggf. verzweigter oder unverzweigter) Alkylrest mit 1 bis 16 C-Atomen, ein (ggf. verzweigter oder unverzweigter) Alkenylrest mit 2 bis 16 C-Atomen, ein substituierter oder unsubstantiierter Arylrest oder ein substituierter oder unsubstantiierter Benzylrest ist.

Eine Zusammensetzung ist erfindungsgemäß besonders bevorzugt, wobei das mindestens eine organische Salz eine Verbindung ist, die ausgewählt ist aus der Gruppe bestehend aus 1-Ethyl-3-methylimidazoliumbromid (CAS-Nr.: 65039-08-9), 1-Propyl-3-methylimidazoliumbromid (CAS-Nr.: 85100-76-1), 1-Butyl-3-methylimidazoliumbromid (CAS-Nr.: 85100-77-2), 1-Hexyl-3-methylimidazoliumbromid (CAS-Nr.: 85100-78-3), 1-Octyl-3-methylimidazoliumbromid (CAS-Nr.: 61545-99-1), 1-Decyl-3-methylimidazoliumbromid (CAS-Nr.: 188589-32-4), 1-Benzyl-3-methylimidazoliumbromid (CAS-Nr.: 65039-11-4), 1-Ethyl-3-methylimidazoliumchlorid (CAS-Nr.: 65039-09-0), 1-Propyl-3-methylimidazoliumchlorid (CAS-Nr.: 79917-89-8), 1-Butyl-3-methylimidazoliumchlorid (CAS-Nr.: 79917-90-1), 1-Hexyl-3-methylimidazoliumchlorid (CAS-Nr.: 171058-17-6), 1-Octyl-3-methylimidazoliumchlorid (CAS-Nr.: 64697-40-1), 1-Decyl-3-methylimidazoliumchloride (CAS-Nr.: 171058-18-7), 1-Benzyl-3-methylimidazoliumchlorid (CAS-Nr.: 36443-80-8), 1-Ethyl-3-methylimidazoliumtetrafluoroborat (CAS-Nr.: 143314-16-3), 1-Propyl-3-methylimidazoliumtetrafluoroborat (CAS-Nr.: 244193-48-4), 1-Butyl-3-methylimidazoliumtetrafluoroborat (CAS-Nr.: 174501-65-6), 1-Hexyl-3-methylimidazoliumtetrafluoroborat (CAS-Nr.: 244193-50-8), 1-Octyl-3-methylimidazoliumtetrafluoroborat (CAS-Nr.: 244193-52-0), 1-Decyl-3-methylimidazoliumtetrafluoroborat (CAS-Nr.: 81994-88-9), 1-Benzyl-3-methylimidazoliumtetrafluoroborat (CAS-Nr.: 52461-82-2), 1-Ethyl-3-methylimidazoliumhexafluorophosphat (CAS-Nr.: 155371-19-0), 1-Propyl-3-methylimidazoliumhexafluorophosphat (CAS-Nr.: 216300-12-8), 1-Butyl-3-methylimidazoliumhexafluorophosphat (CAS-Nr.: 174501-64-5), 1-Hexyl-3-methylimidazoliumhexafluorophosphat (CAS-Nr.: 304680-35-1), 1-Octyl-3-methylimidazoliumhexafluorophosphat (CAS-Nr.: 304680-36-2), 1-Decyl-3-methylimidazoliumhexafluorophosphat (CAS-Nr.: 362043-46-7), 1-Benzyl-3-methylimidazoliumhexafluorophosphat (CAS-Nr.: 433337-11-2), 1-Ethyl-3-methylimidazoliumhexafluoroantimonat (CAS-Nr.: 305370-81-4), 1-Propyl-3-methylimidazoliumhexafluoroantimonat (CAS-Nr.: 1367695-35-9), 1-Butyl-3-methylimidazoliumhexafluoroantimonat (CAS-Nr.: 174645-81-9), 1-Hexyl-3-methylimidazoliumhexafluoroantimonat (CAS-Nr.: 884659-95-4), 1-Octyl-3-methylimidazoliumhexafluoroantimonat (CAS-Nr.: 379712-23-9), 1-Decyl-3-methylimidazoliumhexafluoroantimonat (CAS-Nr.: 1367695-38-2), 1-Benzyl-3-methylimidazoliumhexafluoroantimonat (CAS-Nr.: 1335031-11-2), 1-Ethyl-3-methylimidazoliumbistrifluoromethylsulfonylimide (CAS-Nr.: 174899-82-2), 1-Propyl-3-methylimidazoliumbistrifluoromethylsulfonylimide (CAS-Nr.: 216299-72-8), 1-Butyl-3-methylimidazoliumbistrifluoromethylsulfonylimide (CAS-Nr.: 174899-83-3), 1-Hexyl-3-methylimidazoliumbistrifluoromethylsulfonylimide (CAS-Nr.: 382150-50-7), 1-Octyl-3-methylimidazoliumbistrifluoromethylsulfonylimide (CAS-Nr.: 178631-04-4), 1-Decyl-3-methylimidazoliumbistrifluoromethylsulfonylimide (CAS-Nr.: 433337-23-6), 1-Benzyl-3-methylimidazoliumbistrifluoromethylsulfonylimide (CAS-Nr.: 433337-24-7), 1,3-Dimethyl-benzimidazoliumiodid (CAS-Nr.: 7181-87-5), 1-Ethylpyridiniumbromide (CAS-Nr.: 1906-79-2), 1-Butylpyridiniumchloride (CAS-Nr.: 1124-64-7), 1-Butylpyridiniumbromide (CAS-Nr.: 874-80-6), 1-Butylpyridiniumtetrafluoroborat (CAS-Nr.: 203389-28-0), 1-Butylpyridiniumhexafluorophosphat (CAS-Nr.: 186088-50-6), 1-Butylpyridiniumhexafluoroantimonate (CAS-Nr.: 916730-26-2), 1-Butylpyridiniumbistrifluoromethylsulfonylimide (CAS-Nr.: 187863-42-9), 1-Butyl-2-methylpyridiniumbromid (CAS-Nr.: 26576-84-1), 1-Butyl-3-methylpyridiniumbromid (CAS-Nr.: 26576-85-2), 1-Butyl-4-methylpyridiniumbromid (CAS-Nr.: 65350-59-6), 1,4-Dimethyl-1,2,4-triazoliumiodid (CAS-Nr.: 120317-69-3), 2,3,5-Triphenyl-tetrazoliumchloride (CAS-Nr.: 206-071-6), 1-Methyl-1-propylpiperidiniumchlorid (CAS-Nr.: 1383436-85-8), 1-Butyl-1-methylpiperidiniumchlorid (CAS-Nr.: 845790-13-8), 1-Butyl-1-methylpiperidiniumbromide (CAS-Nr.: 94280-72-5), 1-Butyl-1-methylpiperidiniumtetrafluoroborat (CAS-Nr.: 886439-34-5), 1-Butyl-1-methylpiperidiniumhexafluorophosphat (CAS-Nr.: 1257647-66-7), 1-Butyl-1-methylpiperidiniumbistrifluormethylsulfonylimid (CAS-Nr.: 623580-02-9), 1-Ethyl-1-methylpyrrolidiniumbromid (CAS-Nr.: 69227-51-6), 1-Propyl-1-methylimidazoliumbromid (CAS-Nr.: 608140-09-6), 1-Butyl-1-methylpyrrolidiniumchloride (CAS-Nr.: 479500-35-1), 1-Butyl-1-methylpyrrolidiniumbromid (CAS-Nr.: 93457-69-3), 1-Butyl-1-methylpyrrolidiniumtetrafluoroborat (CAS-Nr.: 345984-11-4), 1-Butyl-1-methylpyrrolidiniumhexafluorophosphat (CAS-Nr.: 330671-29-9), 1-Butyl-1-methylpyrrolidiniumbistrifluormethansulfonylimide (CAS-Nr.: 223437-11-4), 1-Methyl-1-propylpyrrolidiniumbromid (CAS-Nr.: 608140-09-6), Benzethoniumchloride (CAS-Nr.: 121-54-0), Tetraethylammoniumtetrafluoroborat (CAS-Nr.: 429-06-1), Tetraheptylammoniumbromid (CAS-Nr.: 4368-51-8), Tetrakis(decyl)ammoniumbromid (CAS-Nr.: 14937-42-9), Methyltriphenylphosphoniumbromid (CAS-Nr.: 1779-49-3), Ethyltriphenylphosphoniumbromid (CAS-Nr.: 1530-32-1), Propyltriphenylphosphoniumbromid (CAS-Nr.: 6228-47-3), Butyltriphenylphosphoniumbromid (CAS-Nr.: 1779-51-7), Hexyltriphenylphosphoniumbromid (CAS-Nr.: 4762-26-9), Octyltriphenylphosphoniumbromid (CAS-Nr.: 42036-78-2), Decyltriphenylphosphoniumbromid (CAS-Nr.: 32339-43-8), Dodecyltriphenylphosphoniumbromid (CAS-Nr.: 15510-55-1), Benzyltriphenylphosphoniumbromid (CAS-Nr.: 1449-46-3), Ethoxycarbonyltriphenylphosphoniumbromid (CAS-Nr.: 50479-11-3), Butyltriphenylphos-phoniumchlorid (CAS-Nr.: 13371-17-0), Benzyltriphenylphosphoniumchlorid (CAS-Nr.: 1100-88-5), Butyltriphenylphosphoniumtetrafluoroborat (CAS-Nr.: 51260-11-6), Benzyltriphenylphosphoniumtetrafluoroborat (CAS-Nr.: 31240-52-5), Butyltriphenylphosphoniumhexafluorophosphat (CAS-Nr.: 116737-98-5), Benzyltriphenylphosphoniumhexafluorophosphat (CAS-Nr.: 87412-23-5), Ethyltributylphosphoniumdiethylphosphat (CAS-Nr.: 20445-94-7), Tetrabutylphosphoniumbromid (CAS-Nr.: 3115-68-2), Hexyltributylphosphoniumbromid (CAS-Nr.: 105890-71-9), Tributylhexadecylphosphoniumbromid (CAS-Nr.: 14937-45-2), Tetrabutylphosphoniumchlorid (CAS-Nr.: 2304-30-5), Tributyltetradecylphosphoniumchlorid (CAS-Nr.: 81741-28-8), Trihexyltetradecylphosphoniumbromid (CAS-Nr.: 654057-97-3) und Trihexyltetradecylphosphoniumchlorid (CAS-Nr.: 81741-28-8).

Eine Zusammensetzung ist erfindungsgemäß noch weiter bevorzugt, wobei das mindestens eine organische Salz eine Verbindung ist, die ausgewählt ist aus der Gruppe bestehend aus 1-Ethyl-3-methylimidazoliumbromid (CAS-Nr.: 65039-08-9), 1-Propyl-3-methylimidazoliumbromid (CAS-Nr.: 85100-76-1), 1-Butyl-3-methylimidazoliumbromid (CAS-Nr.: 85100-77-2), 1-Hexyl-3-methylimidazoliumbromid (CAS-Nr.: 85100-78-3), 1-Octyl-3-methylimidazoliumbromid (CAS-Nr.: 61545-99-1), 1-Decyl-3-methylimidazoliumbromid (CAS-Nr.: 188589-32-4), 1-Benzyl-3-methylimidazoliumbromid (CAS-Nr.: 65039-11-4), 1-Butyl-3-methylimidazoliumchlorid (CAS-Nr.: 79917-90-1), 1-Butyl-3-methylimidazoliumtetrafluoroborat (CAS-Nr.: 174501-65-6), 1-Butyl-3-methylimidazoliumhexafluorophosphat (CAS-Nr.: 174501-64-5), ), 1-Butyl-3-methylimidazoliumhexafluoroantimonat (CAS-Nr.: 174645-81-9), 1-Butyl-3-methylimidazoliumbistrifluoromethylsulfonylimide (CAS-Nr.: 174899-83-3), 1-Butylpyridiniumchloride (CAS-Nr.: 1124-64-7), 1-Butyl-1-methylpiperidiniumbromide (CAS-Nr.: 94280-72-5), 1-Butyl-1-methylpiperidiniumtetrafluoroborat (CAS-Nr.: 886439-34-5), 1-Ethyl-1-methylpyrrolidiniumbromid (CAS-Nr.: 69227-51-6), 1-Propyl-1-methylimidazoliumbromid (CAS-Nr.: 608140-09-6), 1-Butyl-1-methylpyrrolidiniumbromid (CAS-Nr.: 93457-69-3), Benzethoniumchloride (CAS-Nr.: 121-54-0), Tetra-kis(decyl)ammoniumbromid (CAS-Nr.: 14937-42-9), Methyltriphenylphosphoni-umbromid (CAS-Nr.: 1779-49-3), Ethyltriphenylphosphoniumbromid (CAS-Nr.: 1530-32-1), Propyltriphenylphosphoniumbromid (CAS-Nr.: 6228-47-3), Butyltriphenylphosphoniumbromid (CAS-Nr.: 1779-51-7), Hexyltriphenylp-hosphoniumbromid (CAS-Nr.: 4762-26-9), Octyltriphenylphosphoniumbromid (CAS-Nr.: 42036-78-2), Decyltriphenylphosphoniumbromid (CAS-Nr.: 32339-43-8), Dodecyltriphenylphosphoniumbromid (CAS-Nr.: 15510-55-1), Benzyltriphenylphosphoniumbromid (CAS-Nr.: 1449-46-3), Ethoxycarbonyltriphenylphosphoniumbromid (CAS-Nr.: 50479-11-3), Butyltriphenylphos-phoniumchlorid (CAS-Nr.: 13371-17-0), Benzyltriphenylphosphoniumchlorid (CAS-Nr.: 1100-88-5), Butyltriphenylphosphoniumtetrafluoroborat (CAS-Nr.: 51260-11-6), (CAS-Nr.: Benzyltriphenylphosphoniumtetrafluoroborat (CAS-Nr.: 31240-52-5), Butyltriphenylphosphoniumhexafluorophosphat (CAS-Nr.: 116737-98-5), Benzyltriphenylphosphoniumhexafluorophosphat (CAS-Nr.: 87412-23-5), Tetra-butylphosphoniumbromid (CAS-Nr.: 3115-68-2), Hexyltributylphosphonium-bromid (CAS-Nr.: 105890-71-9), Tributylhexadecylphosphoniumbromid (CAS-Nr.: 14937-45-2) und Tributyltetradecylphosphoniumchlorid (CAS-Nr.: 81741-28-8).

Eine Zusammensetzung ist erfindungsgemäß bevorzugt, wobei das organische Salz als Kation eine Verbindung umfasst, die als Grundstruktur ein Aziridinium, Imidazolium, Benzimidazolium, Pyrazolium, Pyridinium, Triazolium, Tetrazolium, Oxazolium, Piperidinium, Pyrrolidinium, Ammonium oder Thiazolium umfasst.

Zusammensetzung nach einem der vorherigen Ansprüche, wobei das organisches Salz einen Schmelzpunkt unter 100 °C aufweist, vorzugsweise einen Schmelzpunkt unter 95 °C aufweist, besonders bevorzugt einen Schmelzpunkt unter 80 °C aufweist.

Eigene Untersuchungen haben überraschenderweise gezeigt, dass es erfindungsgemäß bevorzugt ist, wenn das organische Salz eine ionische Flüssigkeit ist. Bei ionischen Flüssigkeiten handelt es sich um Salze, die bei Temperaturen unter 100 °C flüssig sind, ohne dass das Salz dabei in einem Lösungsmittel wie Wasser gelöst ist. Bei organischen Salzen, die als Kation eine Verbindung umfassen, die als Grundstruktur ein Phosphonium aufweisen (Verbindung der Formel IV) spricht man bereits von einer ionischen Flüssigkeit, wenn die Salze bei einer Temperatur unter 200 °C flüssig sind, ohne dass das Salz dabei in einem Lösungsmittel wie Wasser gelöst ist. Erfindungsgemäß bevorzugt ist es somit, wenn es sich bei dem organischen Salz
A) um eine Verbindung der Formel I, II oder III handelt und die Verbindung einen Schmelzpunkt unter 100 °C aufweist, vorzugsweise einen Schmelzpunkt unter 95 °C aufweist, besonders bevorzugt einen Schmelzpunkt unter 80 °C aufweist
   oder
B) um eine Verbindung der Formel IV handelt und die Verbindung einen Schmelzpunkt unter 200 °C aufweist, vorzugsweise einen Schmelzpunkt unter 195 °C aufweist, besonders bevorzugt einen Schmelzpunkt unter 180 °C aufweist.

Eigene Untersuchungen haben gezeigt, dass sich der niedrige Schmelzpunkt der organischen Verbindungen positiv auf die Reaktionsgeschwindigkeit auswirkt. Ohne sich auf eine bestimmte Theorie festlegen zu wollen, wird davon ausgegangen, dass die organischen Salze in den erfindungsgemäßen Zusammensetzungen flüssig vorliegen oder während des Erwärmens der erfindungsgemäßen Zusammensetzung schmelzen. Dies wirkt sich zum einen vorteilhaft auf die Viskosität der erfindungsgemäßen Zusammensetzungen aus und zudem wird die Reaktion (Härtung) der Zusammensetzung beschleunigt.

Bevorzugt sind erfindungsgemäße Zusammensetzungen, wobei der Katalysator (oder sofern mehr als ein Katalysator eingesetzt wird, die Gesamtmasse aller Katalysatoren) in einer Menge von 0,01 bis 7 Gew.-% vorhanden ist, vorzugsweise in einer Menge von 0,05 bis 5 Gew.-% vorhanden ist, weiter bevorzugt in einer Menge von 0,1 bis 3 Gew.-% enthalten ist, weiter bevorzugt in eine Menge von 0,5 bis 1,5 Gew.-% enthalten ist, bezogen auf das Gesamtgewicht der Zusammensetzung.

Eigene Untersuchungen haben gezeigt, dass erfindungsgemäße Zusammensetzungen besonders gute Eigenschaften aufweisen, wenn als organisches Salz die oben aufgeführten Salze und insbesondere die als bevorzugt gekennzeichneten Salze verwendet werden.

Bei Carbonsäureanhydridgruppen handelt es sich um reaktive Carbonsäurederivate, die aus zwei Acylgruppen bestehen, die durch ein Sauerstoffatom miteinander verbunden sind. Durch Hydrolyse können Carbonsäureanhydridgruppen in zwei Carbonsäuregruppen überführt werden.

Eine Zusammensetzung ist erfindungsgemäß bevorzugt, wobei es sich bei dem zweiten Monomer um eine Di-, Tri- oder Tetracarbonsäure, um ein Carbonsäureanhydrid mit einer, zwei oder drei Anhydridgruppen oder und Mischungen aus den vorgenannten Monomeren handelt. Sofern es sich bei dem zweiten Monomer um eine Verbindung handelt, die mindestens eine Carbonsäureanhydridgruppe aufweist, ist es erfindungsgemäß bevorzugt, wenn es sich um ein Carbonsäureanhydrid handelt, das formal durch eine intramolekulare Wasserabspaltung gebildet wurde. In diesem Fall würde die Hydrolyse des Carbonsäureanhydrids zu einem Monomer mit mindestens zwei Carbonsäuregruppen führen und nicht zu zwei Monomeren mit jeweils einer Carbonsäuregruppe. Entsprechende Carbonsäureanhydride weisen die folgende allgemeine Struktur auf 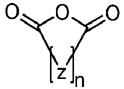 wobei Z ein organisches Strukturelement beliebiger Größe und Substitution, das die zwei Acylgruppen miteinander verbindet und n ist 0 oder 1. Das einfachste Carbonsäureanhydrid, dass unter diese allgemeine Struktur fällt, ist das Bernsteinsäureanhydrid.

Eine Zusammensetzung ist erfindungsgemäß bevorzugt, wobei das zweite Monomer ausgewählt ist aus der Gruppe bestehend aus 1,2,3-Propentricarbonsäure, 5-Norbornen-endo-2,3-dicarbonsäureanhydrid, Acelainsäure, Adipinsäure, Admerginsäure, Azelainsäure , Bernsteinsäure, Bernsteinsäureanhydrid, 3-alkyl-substituierte Bernsteinsäureanhydride, Chlorendianhydrid, Citraconsäure, Citronensäure, Dimerfettsäuren (vorzugsweise hydrierte Dimerfettsäuren), Dodecandisäure, Fumarsäure, Furandicarbonsäure, Glucagonsäure, Glutarsäure, Glutarsäureanhydrid, Isocitronensäure, Isophthalsäure, Itaconsäure, Itaconsäureanhydrid, Korksäure, Maleinsäure, Maleinsäureanhydrid, Malonsäure, Metaconsäure, Methylhexahydrophthalsäureanhydrid, Methyltetrahydrophthalsäureanhydrid, Muconsäure, Naphthylanhydrid, Oxalsäure, Phthalsäure, Phthalsäureanhydrid, Pimelinsäure, Pyromellitsäure, Pyromellitsäuredianhydrid, Sebacinsäure, Sulfobernsteinsäure, Terephtalsäure, Trimellithsäureanhydrid, Trimerfettsäuren (vorzugsweise hydrierte Trimerfettsäuren), Trimesinsäure, Weinsäure und Gemische aus den vorgenannten Monomeren.

Erfindungsgemäß besonders bevorzugt ist eine Zusammensetzung, wobei das zweite Monomer ausgewählt ist aus der Gruppe bestehend aus 1 ,2,3-Propentricarbonsäure, Adipinsäure, Azelainsäure, Bernsteinsäure, Bernsteinsäureanhydrid, Citronensäure, Dimerfettsäuren (vorzugsweise hydriert), Dodecandisäure, Glutarsäure, Glutarsäureanhydrid, Isocitronensäure, Maleinsäure, Maleinsäureanhydrid, Malonsäure, Oxalsäure, Pimelinsäure, Pyromellitsäure, Pyromellitsäuredianhydrid, Sebacinsäure, Terephtalsäure, Trimesinsäure und Gemische aus den vorgenannten Monomeren.

Eigene Untersuchungen haben ergeben, dass die oben genannten zweiten Monomere und insbesondere die als besonders bevorzugt bezeichneten zweiten Monomere besonders gute Eigenschaften in Antidröhnmassen aufweisen, da sie aufgrund Ihrer chemischen Struktur und den sich aus der chemischen Struktur ergebenen Freiheitsgraden der Verbindungen gut in Schwingungen versetzt werden können, was eine Aufnahme von Schall und eine Überführung der Schallwellen in Wärmeenergie ermöglicht. Verglichen mit beispielsweise häufig als Antidröhnmassen verwendeten Butadien-Kautschuken können hier beispielsweise noch die Acylgruppen (C=O) in Translations-, Streck, und Valenzschwingungen versetzt werden.

Bevorzugt sind erfindungsgemäße Zusammensetzungen, wobei das zweite Monomer (oder sofern mehr als ein zweites Monomer eingesetzt wird, die Gesamtmasse aller zweiten Monomere) in einer Menge von 5 bis 50 Gew.-% vorhanden ist, vorzugsweise in einer Menge von 10 bis 40 Gew.-% vorhanden ist, weiter bevorzugt in einer Menge von 15 bis 35 Gew.-% enthalten ist, weiter bevorzugt in eine Menge von 20 bis 30 Gew.-% enthalten ist, bezogen auf das Gesamtgewicht der Zusammensetzung.

Eine Zusammensetzung ist erfindungsgemäß bevorzugt, wobei das erste Monomer drei, vier, fünf, sechs, sieben, acht, neun, zehn oder elf Epoxidgruppen umfasst. Eigene Untersuchungen haben ergeben, dass eine erfindungsgemäße Zusammensetzung besonders bevorzugt ist, wobei das erste Monomer a) drei oder b) sechs bis acht Epoxidgruppen umfasst.

Eigene Untersuchungen haben überraschenderweise gezeigt, dass die Anzahl der Epoxidgruppen eine Auswirkung auf die Vernetzung der ausgehärteten Zusammensetzung aufweisen. Dabei haben eigene Untersuchungen gezeigt, dass bei mehr als elf Epoxidgruppen die Vernetzung zu stark ausgebildet ist und dass die resultierenden Materialien zu fest werden und somit eine Schalldämpfung bzw. Absorption von Vibrationen negativ beeinträchtig wird bzw. abnimmt. Bei weniger als drei Epoxidgruppen ist die Vernetzung allerdings nicht ausreichend und die Vernetzungsreaktion läuft zudem verlangsamt ab. Eigene Untersuchungen haben ergeben, dass ein Optimum bezüglich Vernetzungsgeschwindigkeit und Vibrationsdämpfung erreicht werden kann, wenn das erste Monomer drei, sechs, sieben oder acht Epoxidgruppen umfasst.

Unter einem Pflanzenöl (pflanzlichen Öl) wird ein Fettsäuretriglycerid verstanden, das aus Pflanzen oder Pflanzenteilen gewonnen wird. Die Gewinnung des Öls erfolgt dabei üblicherweise durch Pressen, Extraktion oder Raffination der Öle aus den Pflanzen oder Pflanzenteilen. Die Gewinnung der Öle ist dem Fachmann bekannt. Werden Pflanzensamen zur Ölgewinnung benutzt, werden diese als Ölsaaten bezeichnet. In den Samen kommt das Öl in Form von Lipiden vor, die dessen Zellmembran und Energiereserven darstellen. Abhängig von dem Anteil an ungesättigten Fettsäuren im Öl wird zwischen nichttrocknenden (beispielsweise Olivenöl), halbtrocknenden (beispielsweise Soja- oder Rapsöl) und trocknenden Ölen (beispielsweise Lein- oder Mohnöl) unterschieden.

Mögliche Quellen für Pflanzenöle sind Agaiöl, Algenöl, Arganöl (aus den Früchten des Arganbaums), Avocadoöl (aus dem Fruchtfleisch der Avocado des Avocadobaums), Babaguöl, Baumwollsamenöl (aus den Samen der Baumwollpflanze), Borretschöl oder Borretschsamenöl (aus den Samen der Borretschpflanze), Cupuagu-Butter, Cashew- Schalenöl, Distelöl (auch "Safloröl" genannt, aus den Samen der Färberdistel oder Carthamus), Erdnussöl (aus der Frucht der Erdnusspflanze), Haselnussöl (aus den Haselnüssen des Haselnussbusches), Hanföl (aus den Samen des Speisehanfs), Jatrophaöl (aus dem Samen der Jatropha curcas), Jojobaöl (eigentlich ein flüssiges Wachs; aus den Samen des Jojobastrauchs), Kamelieöl (aus den Samen der Camellia oleifera, Camellia sinensis oder Camellia japonica), Kakaobutter, Kokosöl (aus dem Samenfleisch der Kokosnuss, der Baumfrucht der Kokospalme), Kürbiskernöl (auch als Kernöl bezeichnet; aus den Samenkernen des Steirischen Ölkürbis), Leinöl (aus den reifen Leinsamen des Lein), Leindotteröl (aus den Samen des Leindotters, Familie der Kreuzblütengewächse), Macadamiaöl (aus den Nüssen des Macadamiabaums), *Lallemantia Iberica* Öl (Öl vom Iberischer Drachenkopf), Maiskeimöl (aus den Keimen von Mais), Mandelöl (aus den Mandeln des Mandelbaums), Mangobutter (aus Mangifera indica), Marillenkernöl bzw. Aprikosenkernöl (aus dem Aprikosenkern - also der Mandel des Aprikosensteins - der Aprikose bzw. Marille), Mohnöl (aus den Samenkörnern des Mohns), Nachtkerzenöl, Olivenöl (aus dem Fruchtfleisch und dem Kern der Olive, der Frucht des Olivenbaums), Palmöl (aus dem Fruchtfleisch der Palmfrucht, der Frucht der Ölpalme), Palmkernöl (aus den Kernen der Palmfrucht, der Frucht der Ölpalme), Papayaöl, Pistazienöl, Pekannussöl, Perillaöl aus den Samen der der Perilla-Pflanze (Shiso, Sesamblatt), Rapsöl (aus dem Samen von Raps, Familie der Kreuzblütengewächse), Reisöl, Rizinusöl (aus dem Samen des Wunderbaums), Sanddornöl (aus dem Fruchtfleisch der Sanddornbeere, der Frucht des Sanddornstrauches), Sanddornkernöl (aus den Kernen der Sanddornbeere, der Frucht des Sanddornstrauches), Senföl (aus den Samenkörnern des Schwarzen Senfs), Schwarzkümmelöl (aus den Samen der Fruchtkapsel der Schwarzkümmelpflanze), Sesamöl (aus den Samen der Sesampflanze), Sheabutter (aus den Samen des Sheanussbaums), Sojaöl (aus den Bohnen der Sojabohne), Sonnenblumenöl (aus den Kernen der Sonnenblume), Tungöl, Walnussöl (aus den Kernen der Nüsse des Walnussbaums), Wassermelonensamenöl, Traubenkernöl (aus den Kernen der Früchte (Weintraube) der Weinpflanze bzw. Weinrebe), Weizenkeimöl (aus den Keimen des Weizens) und/oder Zedernöl (aus dem Holz der Libanonzeder). Diese Liste ist nicht als abgeschlossen anzusehen, sie zeigt Möglichkeiten zur Gewinnung von pflanzlichen Ölen, welche zu einer erfindungsgemäßen Zusammensetzung verwendet werden können, nachdem diese Öle epoxidiert wurden.

Die Pflanzenöle werden mit für den Fachmann bekannten Verfahren epoxiert und können anschließend in erfindungsgemäßen Zusammensetzungen verwendet werden. Hierbei ist es insbesondere bevorzugt, wenn die Öle mehrfach ungesättigt sind.

Eine Zusammensetzung ist erfindungsgemäß bevorzugt, wobei das erste Monomer ausgewählt ist aus der Gruppe bestehend aus epoxidiertem Sojaöl, epoxidiertem Holunderkernöl, epoxidiertem Rapsöl, epoxidiertem Sonnenblumenöl, epoxidiertem Öl von Lallemantia Iberica, epoxidiertem Leinöl, epoxidiertem Gummisamenöl, epoxidiertem Rizinusöl, epoxidiertem Drachenkopföl, epoxidiertem Olivenöl und epoxidiertem Hanföl.

Eigene Untersuchungen haben überraschenderweise gezeigt, dass diese als besonders bevorzugt gekennzeichneten epoxidierte Pflanzenöle besonders gut geeignet sind, um in erfindungsgemäßen Zusammensetzungen verwendet zu werden und die aus den erfindungsgemäßen Zusammensetzungen gewonnenen Antidröhnmassen zeigen besonders gute schalldämpfende Eigenschaften.

Bevorzugt sind erfindungsgemäße Zusammensetzungen, wobei das erste Monomer (oder sofern mehr als ein erstes Monomer eingesetzt wird, die Gesamtmasse aller ersten Monomere) in einer Menge von 5 bis 50 Gew.-% vorhanden ist, vorzugsweise in einer Menge von 10 bis 45 Gew.-% vorhanden ist, weiter bevorzugt in einer Menge von 15 bis 35 Gew.-% enthalten ist, weiter bevorzugt in eine Menge von 20 bis 30 Gew.-% enthalten ist, bezogen auf das Gesamtgewicht der Zusammensetzung.

Eigene Untersuchungen haben gezeigt, dass es vorteilhaft ist, wenn das Molverhältnis zwischen dem ersten Monomer (oder sofern mehr als ein erstes Monomer eingesetzt wird, die Gesamtmol aller ersten Monomere) und dem zweiten Monomer (oder sofern mehr als ein zweites Monomer eingesetzt wird, die Gesamtmol aller zweiten Monomere) im Bereich von 1,5 zu 1 bis 1 zu 1,5 vorliegt, vorzugsweise von 1,17 zu 1 bis 1 zu 1,18 vorliegt, weiter bevorzugt von 1,09 zu 1 bis 1 zu 1,09 vorliegt. In einigen Ausgestaltungen der vorliegenden Verbindungen ist es bevorzugt, wenn das Molverhältnis zwischen erstem und zweitem Monomer im Bereich von 1,17 zu 1 liegt.

Erfindungsgemäß umfasst die Zusammensetzung kein Schwefel und keine flüchtigen schwefelhaltigen Verbindungen. Erfindungsgemäß bevorzugt umfasst die Zusammensetzungen weniger als 100 ppm Schwefelatome, vorzugsweise weniger als 50 ppm Schwefelatome, weiter bevorzugt weniger als 5 ppm Schwefelatome.

Unter flüchtigen schwefelhaltigen Verbindungen werden im Rahmen der vorliegenden Erfindung Verbindungen verstanden, die das Element Schwefel aufweisen und einem Anfangssiedepunkt von höchstens 250 °C bei einem Standarddruck von 101,3 kPa aufweist.

Erfindungsgemäß bevorzugt umfasst eine erfindungsgemäße Zusammensetzung kein p-Benzochinondioxim, Chinonen, Chinondioximen oder Dinitrosobenzol (insbesondere kein 1,4-Dinitrosobenzol).

Erfindungsgemäß bevorzugt umfasst eine erfindungsgemäße Zusammensetzung kein Diacetylperoxid, Di-tertbutylperoxid, Dicumylperoxid oder Dibenzoylperoxid, insbesondere keine Peroxide.

Eine erfindungsgemäße Zusammensetzung ist bevorzugt, die zusätzlich
d) mindestens einem Füllstoff
umfasst.

Eine Zusammensetzung ist erfindungsgemäß bevorzugt, wobei der mindestens eine Füllstoff ausgewählt ist aus der Gruppe bestehend aus Calciumcarbonat, Graphit, Glasfaser, Kohlefasern, Kunststofffasern, Quarzmehl, Sepiolithen, organisch modifizierten Sepiolithen, Kunststoffpartikeln, Keramiken, Mineralien, Glimmer, Blähgraphit, Schwerspat, Feldspat, Natronfeldspat, Kalifeldspat, Kaolin, Kreide, Talkum, Aluminiumoxid, Bentone, Kieselsäureaerosol, Lithopone, Titandioxid, Russ, Schiefermehl, Wollastonit, Dolomit, Magnesiumcarbonat, Gips, Glaspulver, Glaskugeln, Zinksulfid, Siliciumcarbid, Cristoballit, Keramik Hohlkugeln, Kunststoffhohlkugeln, Cellulose (vorzugsweise kristallin), Olivenkernmehl, Lignin (Lignocellulose), Silica, Naturfasern (Bambus, Flax), Fruchtsteinmehl, Nussschalenmehl, Thermoplasten, Elastomeren, Gummirezyklaten, Rezyklaten und Mischungen aus den vorgenannten Füllstoffen.

Erfindungsgemäß besonders bevorzugt ist die Verwendung einer Mischung der oben aufgeführten Füllstoffe, insbesondere mit zwei, drei oder vier unterschiedlichen Füllstoffen. Dabei hat es sich als besonders bevorzugt erwiesen, wenn ein faserartiger und ein plättchenförmiger Füllstoff (und ggf. weitere Füllstoffe) miteinander kombiniert werden. Die Kombination von faserartigen und plättchenförmigen Füllstoffen zeigt überaschenderweise besonders gute schalldämpfende Eigenschaften, die aus einem synergistischen Effekt der faserartigen und plättchenförmigen Füllstoffe resultiert.

Erfindungsgemäß besonders bevorzugt ist die Verwendung von Graphit, Glasfasern, Glimmer und Mischungen aus Graphit, Glasfaser, Feldspat und Glimmer als Füllstoffe in erfindungsgemäßen Zusammensetzungen.

Eigene Untersuchungen haben überraschenderweise gezeigt, dass erfindungsgemäße Zusammensetzungen besonders gute Dämpfungseigenschaften aufweisen, wenn als Füllstoffe die oben aufgeführten Füllstoffe und insbesondere die als bevorzugt gekennzeichneten Füllstoffe verwendet werden. Ohne sich auf eine bestimmte Theorie festlegen zu wollen, wird angenommen, dass eine Übertragung von Schwingungen zwischen diesen Füllstoffen und den in der Zusammensetzung enthaltenen ersten und zweiten Monomeren resultierendem Polymer besonders gut stattfindet und dabei eine Umwandlung des Schalls in Wärme erfolgt. Die Mischung aus dem durch Polymerisation aus dem ersten und zweiten Monomer erhaltenen Polymer und den oben beschriebenen Füllstoffen zeigen somit eine synergistische Wirkung und weisen eine höhere Schallabsorption auf, als die einzelnen Komponenten alleine aufweisen würden.

Bevorzugt sind erfindungsgemäße Zusammensetzungen, wobei der Füllstoff (oder sofern mehr als ein Füllstoff eingesetzt wird, die Gesamtmasse aller Füllstoffe) in einer Menge 20 bis 70 Gew.-% vorhanden ist, vorzugsweise in einer Menge von 25 bis 65 Gew.-% vorhanden ist, weiter bevorzugt in einer Menge von 35 bis 55 Gew.-% enthalten ist, weiter bevorzugt in eine Menge von 40 bis 50 Gew.-% enthalten ist, bezogen auf das Gesamtgewicht der Zusammensetzung.

Die Auswahl der Füllstoffe und die eingesetzte Menge der Füllstoffe können die akustischen Eigenschaften beeinflussen, hier hat sich gezeigt, dass insbesondere plättchenförmige Füllstoffe wie z.B. Glimmer einen vorteilhaften Einfluss auf die Dämpfung, d.h. auf den Verlustfaktor, haben. Erfindungsgemäß bevorzugt enthalten erfindungsgemäße Zusammensetzungen plättchenförmigen Pigmente als Füllstoffe mit einem (vorzugsweise durchschnittlichen) Aspektverhältnis von 3 bis 100, vorzugsweise von 5 bis 95 aufweist, insbesondere bevorzugt von 10 bis 90. In einer bevorzugten Ausgestaltung ist das (vorzugsweise durchschnittliche) Aspektverhältnis des Füllstoffes größer als 15. Bei dem Aspektverhältnis (auch "Aspect ratio" oder"Shape- Faktor" genannt) handelt es sich um den Quotienten zwischen dem Durchmesser und der Dicke des Plättchens des Füllstoffes vor dem Vermischen mit den weiteren Komponenten. Ein Aspektverhältnis von 15 bedeutet, dass der Durchmesser des Plättchens 15 mal größer ist, als die Dicke des Plättchens.

Der Verlustfaktor kann im Biegeschwingungsversuch gemäß DIN 53440, Teil 3 bestimmt werden. Erfindungsgemäß bevorzugte Zusammensetzungen bilden Antidröhnmassen aus, die eine extrem hohe Dämpfung aufweisen, d.h. einem Verlustfaktor des beschichteten Blechstreifens d (combi) von > 0,1, vorzugsweise 0,2 oder mehr.

Eine Zusammensetzung ist erfindungsgemäß bevorzugt, wobei die Zusammensetzung zusätzlich Entschäumer bzw. Entlüfter enthält. Entschäumer sind chemische Formulierungen mit ausgeprägter Grenzflächenaktivität, die geeignet sind, unerwünschte Schaumbildung während der Herstellung und Verwendung der erfindungsgemäßen Zusammensetzungen zu unterdrücken oder bereits gebildeten Schaum zu zerstören. Entlüfter sind Additive, die das Verschmelzen mehrerer kleinerer Luftblasen zu einer großen und damit den Aufstieg an die Oberfläche begünstigen. Hierdurch wird der Luftblasenanteil in der Zusammensetzung und in der aus der Zusammensetzung resultierenden Antidröhnmasse reduziert. Es gibt auch Verbindungen, die sowohl Entlüfter als auch Entschäumer sein können.

Eine Zusammensetzung ist erfindungsgemäß bevorzugt, wobei die Entschäumer und/oder Entlüfter ausgewählt sind aus Mineralölentschäumern, Silikonentschäumern, Polymerentschäumern oder Mischungen hieraus.

Bevorzugt sind erfindungsgemäße Zusammensetzungen, wobei der Entschäumer (oder sofern mehr als ein Entschäumer eingesetzt wird, die Gesamtmasse aller Entschäumer) und Entlüfter (oder sofern mehr als ein Entlüfter eingesetzt wird, die Gesamtmasse aller Entlüfter) insgesamt in einer Menge 0,01 bis 3 Gew.-% vorhanden ist, vorzugsweise in einer Menge von 0,05 bis 2,5 Gew.-% vorhanden ist, weiter bevorzugt in einer Menge von 0,1 bis 2 Gew.-% enthalten ist, weiter bevorzugt in eine Menge von 0,5 bis 1,5 Gew.-% enthalten ist, bezogen auf das Gesamtgewicht der Zusammensetzung.

Beispiele für Entschäumer oder Entlüfter sind solche, erhältlich von Byk Chemie Japan Ltd., wie BYK-051, BYK-052, BYK-053, BYK 054, BYK-055, BYK-057, BYK-065, BYK-066, BYK-070, BYK-077, BYK-080, BYK-088, BYK-141, BYK A-501, BYK A-500, BYK A-505, BYK A-515, BYK A-525, BYK A-530, BYK 307, BYK 310, BYK 313, BYK 320, BYK 323 oder BYK 350.

Eine Zusammensetzung ist erfindungsgemäß bevorzugt, wobei die Zusammensetzung zusätzlich mindestens ein Netzmittel enthält.

Netzmittel sind Verbindungen oder Zusammensetzungen, die eine Herabsetzung der Grenzflächenspannung zwischen Füllstoffen oder einer festen Oberfläche und der erfindungsgemäßen Monomer-Zusammensetzungen bewirken. Durch die Zugabe von Netzmitteln kann somit beispielsweise die Haftung zwischen Bindemittel-Monomeren und Füllstoff-Partikeln der erfindungsgemäßen Zusammensetzung bzw. der aus der erfindungsgemäßen Zusammensetzung resultierenden Antidröhnmasse an einem Substrat erhöht werden.

Bevorzugt sind erfindungsgemäße Zusammensetzungen, wobei das Netzmittel (oder sofern mehr als ein Netzmittel eingesetzt wird, die Gesamtmasse aller Netzmittel) in einer Menge 0,1 bis 8 Gew.-% vorhanden ist, vorzugsweise in einer Menge von 0,5 bis 6 Gew.-% vorhanden ist, weiter bevorzugt in einer Menge von 1 bis 5 Gew.-% enthalten ist, weiter bevorzugt in eine Menge von 2 bis 4 Gew.-% enthalten ist, bezogen auf das Gesamtgewicht der Zusammensetzung.

Selbst bei Verwendung eines Netzmittels und eines Entschäumers umfassen die erfindungsgemäßen Zusammensetzungen im einfachsten Fall lediglich sechs unterschiedliche Komponenten. Im vergleich mit anderen Systemen - wie beispielsweise in Beispiel 1 der anfangs erwähnten EP1838778B2 beschrieben - sind es verhältnismäßig wenige Komponenten.

Eine Zusammensetzung ist erfindungsgemäß bevorzugt, wobei das Netzmittel ein Tensid, ein Polyelektrolyt oder eine Mischung aus Tensid und Polyelektrolyt ist.

Eine Zusammensetzung ist erfindungsgemäß bevorzugt, wobei die Zusammensetzung zusätzlich mindestens ein Dispergierhilfsmittel enthält.

Bevorzugt sind erfindungsgemäße Zusammensetzungen, wobei die Zusammensetzung
10 bis 40 Gew.-% des ersten Monomers umfasst,
   und/oder
10 bis 40 Gew.-% des zweiten Monomers umfasst,
   und/oder
0,01 bis 5 Gew.-% des organischen Salzes, umfasst,
   und/oder
30 bis 80 Gew.-% Füllstoffe umfasst,
   und/oder
0,01- 3 Gew.-% Entschäumer und Entlüfter (insgesamt) umfasst,
   und/oder
0,01 bis 6 Gew.-% Netzmittel und Dispergierhilfsmittel (insgesamt) umfasst,
jeweils bezogen auf das Gesamtgewicht der erfindungsgemäßen Zusammensetzung.

Aufgrund ihrer Viskosität können erfindungsgemäße Zusammensetzungen mit herkömmlichen Pump-, Dosier-, Spritz- oder Extrusions-Einrichtungen für pastöse Materialien appliziert werden. Die besonders bevorzugten Anwendungsfelder sind dabei Innenbeschichtungen des Fahrzeugbodenbereiches, von Türen oder des Dachbereichs. Die erfindungsgemäßen Zusammensetzungen können wegen ihrer Viskosität im Airless-, Airassisted, Airmix- oder im sogenannten "Swirlspray-Verfahren" (bsw. P-SWIRL oder E-SWIRL) oder weiteren gängigen Sprühverfahren wie z.B. dem "Flat-Stream-Verfahren" angewendet werden.

Bevorzugt sind erfindungsgemäße Zusammensetzungen, wobei die Zusammensetzung eine Viskosität nach DIN 53019-1:2008-09 bestimmte Viskosität bei 20°C von 1500 mPa·s bis 95.000 mPa s, vorzugsweise von 16.000 mPa·s bis 75.000 mPa s, weiter bevorzug von 20.000 mPa·s bis 60.000 mPa·s aufweist.

Ein weiterer Aspekt der vorliegenden Erfindung betrifft ein Polyadditionsproduktes hergestellt aus einer erfindungsgemäßen Zusammensetzung, vorzugsweise zur Verwendung als Antidröhnmasse (LASD), vorzugsweise für den Fahrzeug- oder Gerätebau, Nahtabdichung, vorzugsweise für den Fahrzeug- oder Karosseriebau, Unterbodenschutz, vorzugsweise für den Fahrzeug- oder Karosseriebau, Vergussmasse, vorzugsweise für elektrische Geräte und/oder elektrische Anlagen, Isolatormaterial, vorzugsweise für elektrische Geräte und/oder elektrische Anlagen, Klebstoff, Dichtstoff, Kompositwerkstoff, vorzugsweise für CFK-Laminat, GFK-Laminate und/oder Spanplatten, Korrosionsschutz und/oder Flammschutzbeschichtung.

Bevorzugt sind erfindungsgemäße Polyadditionsprodukte, die als Elastomere, Duroplaste, viskoelastische Materialien und/oder Schäume ausgebildet sind.

Ein weiterer Aspekt der vorliegenden Erfindung betrifft eine Antidröhnmasse hergestellt aus einer erfindungsgemäßen Zusammensetzung. Die Antidröhnmasse lässt sich aus den erfindungsgemäßen Zusammensetzungen herstellen, indem den Zusammensetzungen Energie - meist in Form von Wärmeenergie - zugefügt wird. Hierbei reagieren die ersten mit den zweiten Monomeren und es bildet sich ein Polymer aus. Die Reaktion wird dabei durch das anwesende organische Salz katalysiert. Die Füllstoffe, sofern vorhanden, sind an der chemischen Reaktion meist nicht beteiligt und werden meist von dem Polymer umschlossen, ohne eine chemische Bindung mit dem Polymer einzugehen. In einigen Fällen ist es allerdings möglich und auch vorteilhaft, wenn zudem eine chemische Reaktion zwischen Füllstoff und den Monomeren bzw. dem resultierenden Polymer stattfindet. In diesem Fall kann die Schallabsorption noch weiter verbessert werden, da die Leitung des Schalls zwischen Polymer und Füllstoff bzw. die Umwandlung des Schalls in Wärmeenergie verbessert werden kann.

Die genaue chemische Charakterisierung der aus den Monomeren hergestellten Polymere erweist sich - wie bei Polymeren üblich - als sehr schwierig oder nicht möglich, da die häufig vernetzten Polymere aufgrund ihrer hohen Molekularmasse nicht gelöst werden können um entsprechend analysiert werden zu können.

Ein weiterer Aspekt der vorliegenden Erfindung betrifft eine Verwendung einer erfindungsgemä-ßen Antidröhnmasse als akustisch dämpfendes Material, wobei die Verwendung vorzugsweise im Fahrzeug- oder Gerätebau erfolgt. Die Antidröhnmasse ist hierbei vorzugsweise auf Kork, Holz, Karton, Kunststoffbeschichtete Metallwerkstoffe, Kunststoff, Metall, Papier, Keramik oder Glas aufgetragen.

Ein weiterer Aspekt der vorliegenden Erfindung betrifft eine Verwendung einer erfindungsgemä-ßen Zusammensetzung zur Herstellung eines akustisch dämpfenden Materials (Antidröhnmasse), wobei die Verwendung vorzugsweise im Fahrzeug- oder Gerätebau erfolgt. Die erfindungsgemäße Zusammensetzung wird hierbei vorzugsweise auf Kork, Holz, Karton, Kunststoff-beschichtete Metallwerkstoffe, Kunststoff, Metall, Papier, Keramik oder Glas aufgetragen.

Ein alternativer Aspekt der vorliegenden Erfindung betrifft eine Verwendung einer erfindungsgemäßen Zusammensetzung zur Herstellung eines Dichtungsmaterials, elektrischen Isolators, einer Schicht eines Laminatsverbundes oder von technischen Formteilen.

Erfindungsgemäße Zusammensetzungen können zudem als akustisch dämpfende Klebstoffe oder Dichtstoff verwendet werden.

Ein weiterer Aspekt der vorliegenden Erfindung betrifft eine Verwendung eines organischen Salzes mit einen Schmelzpunkt unter 200 °C zur Katalyse einer Reaktion zwischen
a) mindestens einem ersten Monomer aus einem epoxidierten Pflanzenöl, umfassend mindestens zwei Epoxidgruppen
   und
b) mindestens einem zweiten Monomer, umfassend mindestens zwei Carbonsäure-gruppen oder mindestens eine Carbonsäureanhydridgruppe,
während der Herstellung eines Polyadditionsproduktes.

Das in einer erfindungsgemäßen Verwendung eingesetzte organische Salz, das erste Monomer und das zweite Monomer sind vorzugsweise, wie im Zusammenhang mit der erfindungsgemäßen Zusammensetzung definiert und dort als bevorzugte Ausgestaltungen der Zusammensetzung angegeben. Die zur erfindungsgemäßen Zusammensetzung angegebenen Ausführungsformen gelten hier entsprechend.

Hinsichtlich bevorzugter Ausgestaltungen des vorstehend angegebenen erfindungsgemäßen Verfahrens und diesbezüglich möglicher Kombinationen von einem oder mehreren hier vorstehend angegebenen Aspekten der Erfindung miteinander, gelten die vorstehend für die erfindungsgemäße Zusammensetzungen jeweils angegebenen Erklärungen entsprechend, und umgekehrt, insbesondere bezüglich des organischen Salzes, des ersten Monomers und des zweiten Monomers.

Ein weiterer Aspekt der vorliegenden Erfindung betrifft ein Verfahren zur Applikation einer erfindungsgemäßen Zusammensetzung, umfassend die folgenden Schritte:
- Herstellen oder Bereitstellen einer erfindungsgemäßen Zusammensetzung,
- Auftragen der hergestellten oder bereitgestellten Zusammensetzung auf ein Substrat, vorzugsweise durch Rakeln, Gießen, Streichen, Sprühen oder Spritzen,
- Thermische Behandlung der aufgetragenen Zusammensetzung, sodass die Zusammensetzung aushärtet.

Sofern die erfindungsgemäße Zusammensetzung als Zweikomponentensystem ausgebildet ist kann auf eine thermische Behandlung der aufgetragenen Zusammensetzung verzichtet werden.

In diesem Fall sind die Bestandteile der erfindungsgemäßen Zusammensetzung so aufeinander abgestimmt, dass ein Aushärten der Zusammensetzung nach dem Herstellen der Zusammensetzung, d.h. dem Vermischen der Komponenten, erfolgt, ohne dass eine thermische Behandlung notwendig ist.

Eigene Untersuchungen haben gezeigt, dass erfindungsgemäße Zusammensetzungen pumpbar, spritzbar und streichbar sind. Hierdurch ist es möglich, dass das Auftragen der hergestellten oder bereitgestellten Zusammensetzung auf unterschiedliche Weisen erfolgt.

Ein erfindungsgemäßes Verfahren ist bevorzugt, wobei das Auftragen der hergestellten oder bereitgestellten Zusammensetzung mittels Airless-, Air-assisted, Airmix- Spritzverfahren oder Flat-Stream-Verfahren auf das Substrat aufgespritzt wird.

Bei dem erfindungsgemäßen Verfahren ist es bevorzugt, wenn es sich bei dem Substrat um Kork, Holz, Karton, Kunststoff-beschichtete Metallwerkstoffe, Kunststoff, Metall, Papier, Keramik oder Glas handelt.

Ein weiterer Aspekt der vorliegenden Erfindung betrifft ein Verfahren zur Applikation einer erfindungsgemäßen Zusammensetzung, umfassend die folgenden Schritte:
- Herstellen einer erfindungsgemäßen Zusammensetzung, durch Mischen von zumindest zwei Komponenten,
- Auftragen der hergestellten oder bereitgestellten Zusammensetzung auf ein Substrat, vorzugsweise durch Rakeln, Gießen, Streichen, Sprühen oder Spritzen,
- Aushärtenlassen der aufgetragenen Zusammensetzung.

Bevorzugt erfolgt die Applikation der erfindungsgemäßen Zusammensetzung im Rohkarrosseriebau in der Automobilindustrie, sodass die Härtung der Zusammensetzungen in einem Temperaturbereich zwischen 80°C und 240 °C in 10 bis 60 Min. stattfinden soll, vorzugsweise Temperaturbereich zwischen 110 und 200°C. Üblicherweise wird zunächst ein Substrat, bei dem es sich um eine Autokarosserie, einen Teil einer Autokarosserie, eine Autotür oder eine Kofferraumtür handeln kann, bereitgestellt und mit einer Grundierung vollflächig oder teilflächig beschichtet. Die erfindungsgemäße Zusammensetzung wird dann anschließend auf die Grundierung aufgetragen. Bei der Grundierung handelt es sich hierbei um die für die spätere Lackierung des entsprechenden Substrates benötige Grundierung und nicht um eine zur Auftragung der erfindungsgemäßen Zusammensetzung benötigten Grundierung. Das Substrat wird in einem Offen erwärmt, wobei meist Temperaturen von 120°C bis 180°C verwendet werden. Hierbei härtet dann sowohl die Grundierung als auch das erfindungsgemäße Substrat aus und bildet dabei die Antidröhnmasse aus.

In den nachfolgenden Beispielen soll die Erfindung näher erläutert werden, wobei die Auswahl der Beispiele keine Beschränkung des Umfanges des Erfindungsgegenstandes darstellen soll.

### Beispiel 1:

In einem evakuierbaren Laborkneter wurde die in der nachfolgenden Tabelle 1 aufgeführten Bestandteile unter Vakuum so lange gemischt, bis sie homogen waren.

**Tabelle 1**

| Bestandteil | Chemische Bezeichnung | Menge |
|---|---|---|
| Erstes Monomer | Epoxidiertes Sojaöl | 25 Gew.-% |
| Zweites Monomer | Bernsteinsäure | 25 Gew.-% |
| Katalysator | 1-Butyl-3-methylimidazolium-hexafluoroantimonat (CAS-Nr.: 174645-81-9) | 1 Gew.-% |
| Füllstoff | Glimmer | 45 Gew.-% |
| Entschäumer | BYK 054 | 1 Gew.-% |
| Netzmittel | | 3 Gew.-% |

Das Ergebnis der akustischen Dämpfungsmessung nach dem Biegeschwingungsversuch gemäß DIN 6721, bei 200 Hz in Abhängigkeit von der Temperatur zeigt, dass die erfindungsgemäßen Dämpfungsmassen über den sehr breiten Temperaturbereich von etwa 0°C bis etwa 45°C einen Biegeverlustfaktorvon deutlich oberhalb 0,10 bei einem Belaggewicht von 50 % aufweisen. Dies ist eine deutliche Verbesserung gegenüber den bisher bekannten Kautschukmassen des Standes der Technik sowie anderen akustischen Dämpfungsbeschichtungen.

### Beispiel 2:

In einem evakuierbaren Laborkneter wurde die in der nachfolgenden Tabelle 2 aufgeführten Bestandteile unter Vakuum so lange gemischt, bis sie homogen waren.

**Tabelle 2**

| Bestandteil | Chemische Bezeichnung | Menge |
|---|---|---|
| Erstes Monomer | Epoxidiertes Leinöl | 25 Gew.-% |
| Zweites Monomer | Bernsteinsäureanhydrid | 25 Gew.-% |
| Katalysator | 1-Hexyl-3-methylimidazolium-bromid (CAS-Nr.: 85100-78-3) | 1 Gew.-% |
| Füllstoff | Glimmer | 45 Gew.-% |
| Entschäumer | BYK 054 | 1 Gew.-% |
| Netzmittel | | 3 Gew.-% |

Das Ergebnis der akustischen Dämpfungsmessung nach dem Biegeschwingungsversuch gemäß DIN 6721, bei 200 Hz in Abhängigkeit von der Temperatur zeigt, dass die erfindungsgemäßen Dämpfungsmassen über den sehr breiten Temperaturbereich von etwa 0°C bis etwa 45°C einen Biegeverlustfaktorvon deutlich oberhalb 0,12 bei einem Belaggewicht von 50 % aufweisen. Dies ist eine deutliche Verbesserung gegenüber den bisher bekannten Kautschukmassen des Standes der Technik sowie anderen akustischen Dämpfungsbeschichtungen.

## Patentansprüche

1. Zusammensetzung umfassend oder bestehend aus
a) mindestens ein erstes Monomer aus einem epoxidierten Pflanzenöl, umfassend mindestens zwei Epoxidgruppen,
b) mindestens einem zweiten Monomer, umfassend mindestens zwei Carbonsäure-gruppen oder mindestens eine Carbonsäureanhydridgruppe,
c) mindestens ein organisches Salz, das eine chemische Reaktion zwischen dem ersten und dem zweiten Monomer katalysiert und einen Schmelzpunkt unter 200 °C aufweist.

2. Zusammensetzung nach Anspruch 1, wobei das mindestens eine organische Salz eine Verbindung ist, die ausgewählt ist aus den folgenden Verbindungen
I) eine Verbindung der Formel I 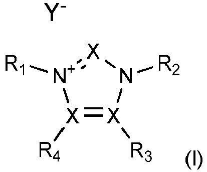 wobei
Xjeweils unabhängig voneinander N oder C bedeuten,
Y Chlorid, Bromid, lodid, Hexafluorophosphat (PF₆-), Bortetrafluorid (BF₄⁻), Hexaflu-oroantimonat (SbF₆⁻), Bis(trifluoromethylsulfonyl)imid (NTf₂⁻), Hydrogensulfat (HSO₄⁻ ), Methylsulfat (CH₃O₄S⁻), Ethylsulfat (EtOSO₃⁻), Tosylat (Tos⁻), Mesylat (Mes-), Nitrat (NO₃⁻), Diethylphosphat ((Et)₂PO₄⁻), Triflat (CF₃SO₃⁻) oder Dicyanamid (N(CN)₂⁻) bedeutet,
R1 und R2 unabhängig voneinander ein Alkylrest mit 1 bis 16 C-Atomen, ein Alkenylrest mit 2 bis 16 C-Atomen, ein substituierter oder unsubstantiierter Arylrest oder ein substituierter oder unsubstantiierter Benzylrest ist,
und
R3 und R4 unabhängig voneinander Wasserstoff, ein Alkylrest mit 1 bis 16 C-Atomen, ein Alkenylrest mit 2 bis 16 C-Atomen, ein substituierter oder unsubstantiierter Arylrest ist,
II) eine Verbindung der Formel II 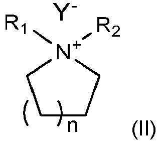 wobei
n gleich 1 oder 2 ist,
Y Chlorid, Bromid, lodid, Hexafluorophosphat (PF₆-), Bortetrafluorid (BF₄⁻), Hexafluoroantimonat (SbF₆⁻), Bis(trifluoromethylsulfonyl)imid (NTf₂⁻), Mesylat (Mes) bedeutet,
R1 und R2 unabhängig voneinander ein Alkylrest mit 1 bis 16 C-Atomen, ein Alkenylrest mit 2 bis 16 C-Atomen, ein substituierter oder unsubstantiierter Arylrest oder ein substituierter oder unsubstantiierter Benzylrest ist,
III) eine Verbindung der Formel III 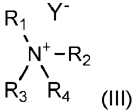 wobei
Y Chlorid, Bromid, lodid, Hexafluorophosphat (PF₆-), Bortetrafluorid (BF₄⁻), Hexafluoroantimonat (SbF₆⁻), Bis(trifluoromethylsulfonyl)imid (NTf₂⁻), Mesylat (Mes-) bedeutet,
R1, R2, R3 und R4 unabhängig voneinander ein Alkylrest mit 1 bis 16 C-Atomen, ein Alkenylrest mit 2 bis 16 C-Atomen, ein substituierter oder unsubstantiierter Arylrest oder ein substituierter oder unsubstantiierter Benzylrest ist oder vorzugsweise R1, R2, R3 und R4 gleich sind und ein Alkylrest mit 1 bis 16 C-Atomen, ein Alkenylrest mit 2 bis 16 C-Atomen, ein substituierter oder unsubstantiierter Arylrest oder ein substituierter oder unsubstantiierter Benzylrest ist,
und
IV) eine Verbindung der Formel IV 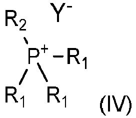 wobei
Y Chlorid, Bromid, lodid, Hexafluorophosphat (PF₆-), Bortetrafluorid (BF₄⁻), Hexafluoroantimonat (SbF₆⁻), Bis(trifluoromethylsulfonyl)imid (NTf₂⁻), Hydrogensulfat (HSO₄⁻ ), Methylsulfat (CH₃O₄S⁻), Ethylsulfat (EtOSO₃⁻), Tosylat (Tos⁻), Mesylat (Mes⁻), Nitrat (NO₃⁻), Diethylphosphat ((Et)₂PO₄⁻), Triflat (CF₃SO₃⁻) oder Dicyanamid (N(CN)₂⁻) bedeutet,
R1 jeweils ein Alkylrest mit 1 bis 16 C-Atomen, ein Alkenylrest mit 2 bis 16 C-Atomen oder ein substituierter oder unsubstantiierter Arylrest ist
und
R2 ein Alkylrest mit 1 bis 16 C-Atomen, ein Alkenylrest mit 2 bis 16 C-Atomen, ein substituierter oder unsubstantiierter Arylrest oder ein substituierter oder unsubstantiierter Benzylrest ist.

3. Zusammensetzung nach Anspruch 2, wobei
A) die Verbindungen der Formel I, II und III einen Schmelzpunkt unter 100 °C aufweisen, vorzugsweise einen Schmelzpunkt unter 95 °C aufweisen, besonders bevorzugt einen Schmelzpunkt unter 80 °C aufweisen,
und
B) die Verbindungen der Formel IV einen Schmelzpunkt unter 200 °C aufweisen, vorzugsweise einen Schmelzpunkt unter 195 °C aufweisen, besonders bevorzugt einen Schmelzpunkt unter 180 °C aufweisen.

4. Zusammensetzung nach einem der vorherigen Ansprüche, wobei das Molverhältnis zwischen dem ersten Monomer (oder sofern mehr als ein erstes Monomer eingesetzt wird, die Gesamtmol aller ersten Monomere) und dem zweiten Monomer (oder sofern mehr als ein zweites Monomer eingesetzt wird, die Gesamtmol aller zweiten Monomere) im Bereich von 1,5 zu 1 bis 1 zu 1,5 vorliegt, vorzugsweise von 1,17 zu 1 bis 1 zu 1,18 vorliegt, weiter bevorzugt von 1,09 zu 1 bis 1 zu 1,09 vorliegt.

5. Zusammensetzung nach einem der vorherigen Ansprüche, wobei der Katalysator (oder sofern mehr als ein Katalysator eingesetzt wird, die Gesamtmasse aller Katalysatoren) in einer Menge von 0,01 bis 7 Gew.-% vorhanden ist, vorzugsweise in einer Menge von 0,05 bis 5 Gew.-% vorhanden ist, weiter bevorzugt in einer Menge von 0,1 bis 3 Gew.-% enthalten ist, weiter bevorzugt in eine Menge von 0,5 bis 1,5 Gew.-% enthalten ist, bezogen auf das Gesamtgewicht der Zusammensetzung.

6. Zusammensetzung nach einem der vorherigen Ansprüche, wobei die Zusammensetzung eine Viskosität nach DIN 53019-1:2008-09 bestimmte Viskosität bei 20°C von 1500 mPa s bis 95.000 mPa s, vorzugsweise von 16.000 mPa·s bis 75.000 mPa s, weiter bevorzug von 20.000 mPa·s bis 60.000 mPa·s aufweist.

7. Zusammensetzung nach einem der vorherigen Ansprüche, wobei das erste Monomer ausgewählt ist aus der Gruppe bestehend aus epoxidiertem Sojaöl, epoxidiertem Holunderkernöl, epoxidiertem Rapsöl, epoxidiertem Sonnenblumenöl, epoxidiertem Öl von Lallemantia Iberica, epoxidiertem Leinöl, epoxidiertem Gummisamenöl, epoxidiertem Rizinusöl, epoxidiertem Drachenkopföl, epoxidiertem Olivenöl und epoxidiertem Hanföl.

8. Zusammensetzung nach einem der vorherigen Ansprüche, wobei es sich bei dem zweiten Monomer um eine Di-, Tri- oder Tetracarbonsäure, um ein Carbonsäureanhydrid mit einer, zwei oder drei Anhydridgruppen oder und Mischungen aus den vorgenannten Monomeren handelt.

9. Zusammensetzung nach einem der vorherigen Ansprüche, wobei das zweite Monomer ausgewählt ist aus der Gruppe bestehend aus 1,2,3-Propentricarbonsäure, 5-Norbornen-endo-2,3-dicarbonsäureanhydrid, Acelainsäure, Adipinsäure, Admerginsäure, Azelainsäure, Bernsteinsäure, Bernsteinsäureanhydrid, 3-alkyl-substituierte Bernsteinsäureanhydride, Chlorendianhydrid, Citraconsäure, Citronensäure, Dimerfettsäuren (vorzugsweise hydriert), Dodecandisäure, Fumarsäure, Furandicarbonsäure, Glucagonsäure, Glutarsäure, Glutarsäureanhydrid, Isocitronensäure, Isophthalsäure, Itaconsäure, Itaconsäureanhydrid, Korksäure, Maleinsäure, Maleinsäureanhydrid, Malonsäure, Metaconsäure, Methylhexahydrophthalsäureanhydrid, Methyltetrahydrophthalsäureanhydrid, Muconsäure, Naphthylanhydrid, Oxalsäure, Phthalsäure, Phthalsäureanhydrid, Pimelinsäure, Pyromellitsäure, Pyromellitsäuredianhydrid, Sebacinsäure, Sulfobernsteinsäure, Terephtalsäure, Trimellithsäureanhydrid, Trimerfettsäuren (vorzugsweise hydriert), Trimesinsäure, Weinsäure und Gemische aus den vorgenannten Monomeren.

10. Zusammensetzung nach einem der vorherigen Ansprüche, zusätzlich umfassend d) mindestens einem Füllstoff.

11. Zusammensetzung nach Anspruch 10, wobei der mindestens eine Füllstoff ausgewählt ist, aus der Gruppe bestehend aus Calciumcarbonat, Graphit, Glasfaser, Kohlefasern, Kunststofffasern, Quarzmehl, Sepiolithen, organisch modifizierten Sepiolithen, Kunststoffpartikeln, Keramiken, Mineralien, Glimmer, Glimmer, Blähgraphit, Schwerspat, Feldspat, Natronfeldspat, Kalifeldspat, Kaolin, Kreide, Talkum, Aluminiumoxid, Bentone, Kieselsäureaerosol, Lithopone, Titandioxid, Russ, Schiefermehl, Wollastonit, Dolomit, Magnesiumcarbonat, Gips, Glaspulver, Glaskugeln, Zinksulfid, Siliciumcarbid, Cristoballit, Keramik Hohlkugeln, Kunststoffhohlkugeln, Cellulose (vorzugsweise kristallin), Olivenkernmehl, Lignin (Lignocellulose), Silica, Naturfasern (Bambus, Flax), Fruchtsteinmehl, Nussschalenmehl, Thermoplasten, Elastomeren, Gummirezyklaten, Rezyklaten und Mischungen aus den vorgenannten Füllstoffen.

12. Zusammensetzung nach einem der vorherigen Ansprüche, wobei das organische Salz einen Schmelzpunkt unter 100 °C aufweist, vorzugsweise einen Schmelzpunkt unter 95 °C aufweist, besonders bevorzugt einen Schmelzpunkt unter 80 °C aufweist.

13. Polyadditionsproduktes hergestellt aus einer Zusammensetzung nach einem der Ansprüche 1 bis 12, vorzugsweise zur Verwendung als Antidröhnmasse (LASD), Nahtabdichung, Unterbodenschutz, Vergussmasse, Klebstoff, Dichtstoff, Kompositwerkstoff, Korrosionsschutz und/oder Flammschutzbeschichtung.

14. Verfahren zur Applikation einer Zusammensetzung nach einem der Ansprüche 1 bis 13, umfassend die folgenden Schritte:
- Herstellen oder Bereitstellen einer Zusammensetzung nach einem der Ansprüche 1 bis 12,
- Auftragen der hergestellten oder bereitgestellten Zusammensetzung auf ein Substrat,
- optional thermische Behandlung der aufgetragenen Zusammensetzung.

15. Verwendung eines organischen Salzes mit einen Schmelzpunkt unter 200 °C zur Katalyse einer Reaktion zwischen
a) mindestens einem ersten Monomer aus einem epoxidierten Pflanzenöl, umfassend mindestens zwei Epoxidgruppen
und
b) mindestens einem zweiten Monomer, umfassend mindestens zwei Carbonsäuregruppen oder mindestens eine Carbonsäureanhydridgruppe,
während einer Herstellung eines Polyadditionsproduktes.
